# EUROPEAN PATENT SPECIFICATION

(11) **EP 4 609 462 B1**
(45) Date of publication and mention of the grant of the patent: **07.10.2026**
(21) Application number: 24856876.8
(22) Date of filing: 20.08.2024
(51) Int. Cl.: H01M 50/242, H01M 50/211, H01M 10/6556, H01M 50/244, B60L 50/64, H01M 10/613, H01M 10/625, H01M 50/262, H01M 50/264, H01M 50/289, H01M 50/271, H01M 50/233, H01M 50/249

(54) **BATTERY CELL ASSEMBLY AND BATTERY PACK INCLUDING THE SAME**
BATTERIEZELLENANORDNUNG UND BATTERIEPACK DAMIT
ENSEMBLE DE CELLULES DE BATTERIE ET BLOC-BATTERIE LE COMPRENANT

(30) Priority: 22.08.2023 KR 20230109636; 21.03.2024 US 202418612910
(43) Date of publication of application: 03.09.2025
(73) Proprietor: LG Energy Solution, Ltd., Seoul 07335 (KR)
(72) Inventor: KIM, Jae Wook, Daejeon 34122 (KR); LEE, Tae Kyeong, Daejeon 34122 (KR); KIM, Gwan Woo, Daejeon 34122 (KR); JANG, Sung Hwan, Daejeon 34122 (KR); JEONG, Jee Hoon, Daejeon 34122 (KR); KIM, Da Young, Daejeon 34122 (KR)
(74) Representative: BCKIP Part mbB
(86) International application number: PCT/KR2024/096035
(87) International publication number: WO 2025/042265

(56) References cited:
- CN-U- 215 816 196
- JP-A- 2013 509 688
- KR-A- 20120 006 973
- KR-A- 20200 112 246
- KR-A- 20220 004 378
- KR-A- 20220 042 840
- US-A1- 2022 140 428

## Description

### [Technical Field]

The present invention relates to a battery cell assembly and a battery pack including the same.

### [Background Art]

Unlike primary batteries, secondary batteries are chargeable and dischargeable multiple times. The secondary batteries are widely used as an energy source for various wireless devices such as handsets, laptop computers, and cordless vacuum cleaners. In recent years, as manufacturing costs per unit capacity of secondary batteries have decreased dramatically due to energy density improvement and economies of scale, and a driving distance of battery electric vehicles (BEV) increases to a level equivalent to that of fuel vehicles, the primary use of secondary batteries shifts from mobile devices to mobilities.

As secondary batteries are used for mobility, there is a growing need for the safety of secondary batteries. When an accident such as a fire occurs in the secondary batteries used for mobility, the life of a driver can be endangered, and thus research on technology for improving the safety of secondary batteries is essential.

The background description provided herein is for the purpose of generally presenting context of the invention. Unless otherwise indicated herein, the materials described in this section are not prior art to the claims in this application and are not admitted to be prior art, or suggestions of the prior art, by inclusion in this section.

Document CN 215 816 196 U discloses a battery module end plate, a battery module and a battery pack. The battery module end plate is used for being arranged opposite to a large surface of a battery. The battery module end plate comprises a body comprising two opposite large surfaces, wherein one large surface is used for being arranged opposite to the large surface of the battery. At least one of the two large surfaces is provided with a bulge, and the bulge extends along the length direction of the large surface so as to resist the expansion of the battery.

Document US 2022 / 0 140 428 A1 discloses a battery module having a plurality of battery cells and a module housing forming an inner space for accommodating the plurality of battery cells. The module housing includes a base plate forming a bottom surface of the module housing, a cover plate integrally forming a top surface and opposite side surfaces of the module housing, and a fastening flange configured to extend in a horizontal direction in a region above the opposite side surfaces of the module housing.

### [Disclosure of the Invention]

### [Technical Problem]

The present invention is directed to providing a battery cell assembly and a battery pack with improved safety.

This and other objects and advantages of the present invention may be understood from the following detailed description and will become more fully apparent from the exemplary embodiments of the present invention. Also, it will be easily understood that the objects and advantages of the present invention may be realized by the means shown in the appended claims and combinations thereof.

### [Technical Solution]

To this end, the present invention provides a battery cell assembly in accordance with claim 1 and a battery pack in accordance with claim 9.

According to a first aspect of the present invention as set out in claim 1, a battery cell assembly includes a cell block including a plurality of battery cells, and a side frame disposed on one side surface of the cell block, wherein the side frame includes a side wall portion and a flange portion disposed on the side wall portion on a side opposite the cell block and configured to be fastened to an external support structure, and wherein the side wall portion includes a hollow space formed throughout an inside thereof.

The hollow space includes an upper buffer space and a lower buffer space, wherein the side wall portion includes an inner side wall facing the one side surface of the cell block, a first outer side wall spaced apart from an upper portion of the inner side wall with the upper buffer space therebetween, and a second outer side wall spaced apart from a lower portion of the inner side wall with the lower buffer space therebetween, wherein the flange portion is connected to the first outer side wall and the second outer side wall, wherein each of the first outer side wall and the second outer side wall is spaced apart from the inner side wall in a first direction, and wherein the first outer side wall is spaced apart from the second outer side wall.

In exemplary embodiments, the plurality of battery cells may be stacked in the first direction.

In exemplary embodiments, the side wall portion may further include: an upper wall extending between an upper end portion of the inner side wall and an upper end portion of the first outer side wall; and a lower wall extending between a lower end portion of the inner side wall and a lower end portion of the second outer side wall, wherein the upper buffer space may be defined by the upper portion of the inner side wall, the upper wall, and the first outer side wall, and wherein the lower buffer space may be defined by the lower portion of the inner side wall, the lower wall, and the second outer side wall.

According to the first aspect of the present invention, the upper buffer space communicates with the lower buffer space through a middle buffer space located near a middle portion of the inner side wall, wherein the flange portion includes an inner space through which a fastening member passes, and wherein the inner space of the flange portion communicates with the middle buffer space.

In exemplary embodiments, the flange portion may include: an upper fastening plate through which the fastening member passes, a lower fastening plate through which the fastening member passes and which is spaced apart from the upper fastening plate with the inner space therebetween, and a connecting plate connecting the upper fastening plate to the lower fastening plate.

In exemplary embodiments, the flange portion may further include a reinforcing rib which extends from the upper fastening plate to the lower fastening plate and is closer to the inner side wall of the side wall portion than the connecting plate.

In exemplary embodiments, the battery cell assembly may further include: a bottom cover plate under the cell block and coupled to a lower end portion of the side wall portion.

In exemplary embodiments, the battery cell assembly may further include: a top cover plate on the cell block and coupled to an upper end portion of the side wall portion.

In exemplary embodiments, the top cover plate may include a cooling channel.

According to a second aspect of the present invention as set out in claim 9, a battery pack includes:
a pack housing including a support structure, and the battery cell assembly of claim 1 accommodated in the pack housing.

In exemplary embodiments, the battery cell assembly may further include: a bottom cover plate under the cell block, and a top cover plate on top of the cell block and including a cooling channel.

In exemplary embodiments, the battery cell assembly and a bottom wall of the pack housing may be spaced apart from each other to form a first space.

In exemplary embodiments, the side wall portion may further include: an upper wall extending between an upper end portion of the inner side wall and an upper end portion of the first outer side wall and coupled to the top cover plate, and a lower wall extending between a lower end portion of the inner side wall and a lower end portion of the second outer side wall and coupled to the bottom cover plate.

In exemplary embodiments, each of the plurality of battery cells may be a pouch-type battery cell.

In exemplary embodiments, a sealed portion of a pouch in the pouch-type battery cell in the cell block may face the first space.

In exemplary embodiments, each of the plurality of battery cells may be a cylindrical-type battery cell or a prismatic-type battery cell comprising a venting portion.

In exemplary embodiments, the venting portion of the cylindrical-type battery cell or the prismatic-type battery cell may face the first space.

According to exemplary embodiments of the present invention, a force acting between a cell block and a fastening portion that fastening a battery cell assembly with a pack housing may increase due to the swelling of the battery cell, but the force can be attenuated and distributed by a buffer space provided in a side wall portion of a side frame. As the force is attenuated and distributed by the buffer space provided in the side wall portion of the side frame, the pressure applied to the fastening portion between the battery cell assembly and the pack housing can be reduced, and damages to the fastening portion between the battery cell assembly and the pack housing can be reduced. In addition, as the force is attenuated and distributed by the buffer space provided in the side wall portion of the side frame, a surface pressure applied to the cell block or the battery cell can be made more uniform. Accordingly, the structural safety of the battery cell assembly can be improved, and the safety and reliability of the battery cell assembly and the battery pack including the same can be improved.

The effects obtained in exemplary embodiments of the present invention are not limited to the above-mentioned effects, and other effects not mentioned above may be clearly derived and understood by a person skilled in the art to which the exemplary embodiments of the present invention belong from the following description. That is, unintended effects in implementing exemplary embodiments of the present invention may also be derived by a person skilled in the art from the exemplary embodiments of the present invention.

### [Advantageous Effects]

According to the embodiments, the force may be attenuated and distributed by the buffer space provided in the side wall portion. As the force is attenuated and distributed by the buffer space provided in the side wall portion, the pressure applied to the fastening portion between the side frame and the support structure may be reduced, and damage to a fastening member such as the bolt, the side frame, and/or the support structure may be reduced. In addition, as the force is attenuated and distributed by the buffer space provided in the side wall portion, a surface pressure applied to the cell block or the battery cell may be made more uniform. Accordingly, the structural safety of the battery cell assembly may be improved, and the safety and reliability of the battery cell assembly and the battery pack including the same may be improved.

### [Description of Drawings]

FIG. 1 is a cross-sectional view illustrating a battery pack according to an exemplary embodiment of the present invention.
FIG. 2 is a perspective view illustrating a battery cell assembly according to an exemplary embodiment of the present invention.
FIG. 3 is a cross-sectional view illustrating a side frame of the battery cell assembly according to an exemplary embodiment of the present invention.
FIG. 4 is a cross-sectional view illustrating a side frame according to a comparative example.
FIG. 5 is a cross-sectional view illustrating the side frame according to an exemplary embodiment of the present invention.
FIG. 6 is a schematic view illustrating an electric vehicle equipped with the battery pack according to exemplary embodiments of the present invention.

### [Best Mode]

The embodiments described herein and the configurations illustrated in the drawings are merely one of the examples of the present invention .

Further, in the following description of the present invention, a detailed description of known configurations or functions incorporated herein will be omitted when it is determined that such description may make the gist of the present invention rather unclear.

Since the embodiments of the present invention are provided to more fully illustrate the present invention to those of ordinary skill in the art, the shapes and sizes of components in the drawings may be exaggerated, omitted, or schematically illustrated for clarity. Thus, the size or ratio of each component is not entirely reflecting the actual size or ratio.

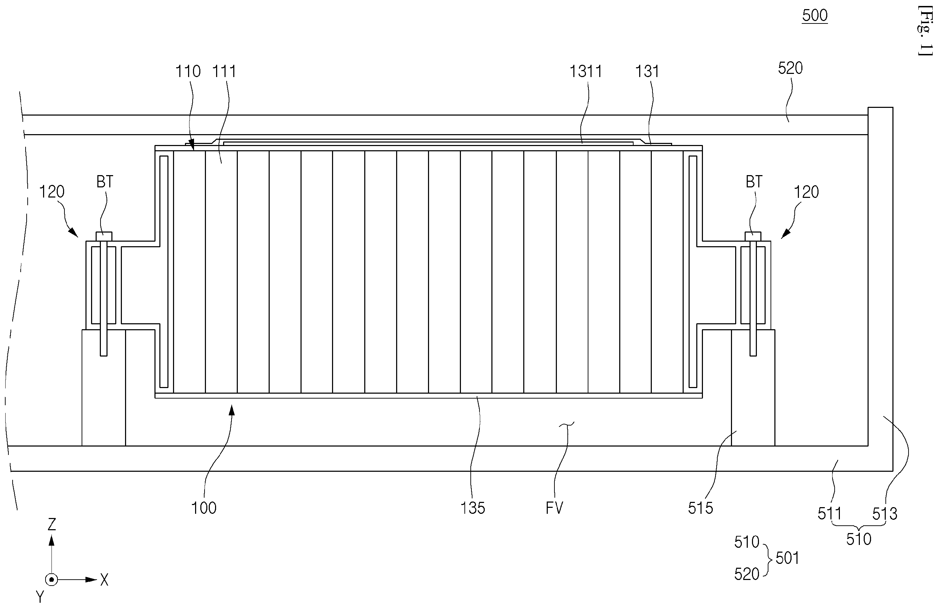

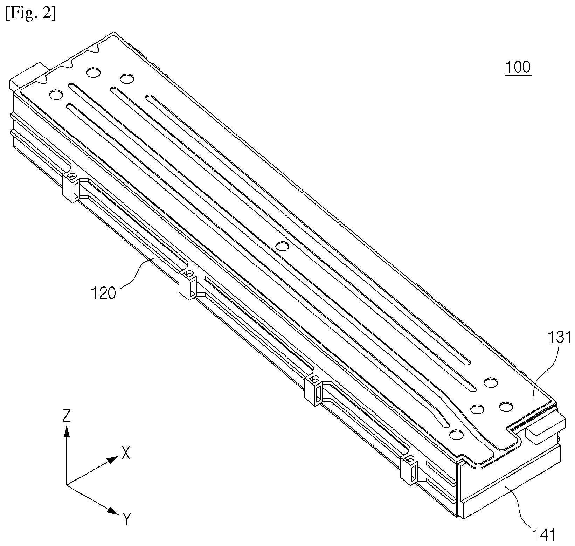

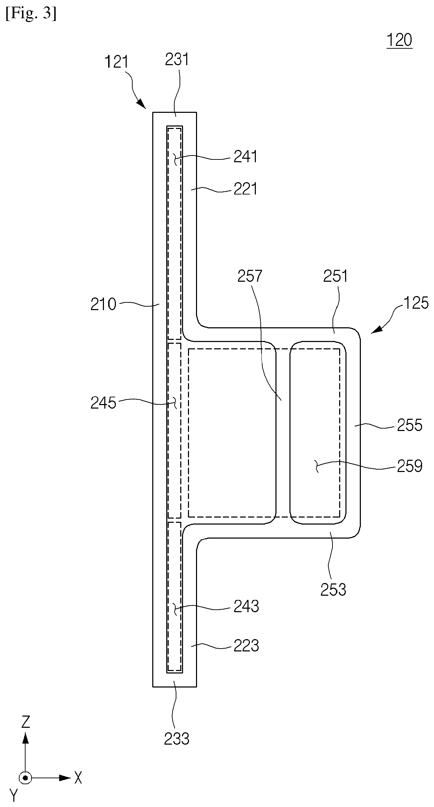

FIG. 1 is a cross-sectional view illustrating a battery pack 500 according to an exemplary embodiment of the present invention. FIG. 2 is a perspective view illustrating a battery cell assembly 100 according to an exemplary embodiment of the present invention. FIG. 3 is a cross-sectional view illustrating a side frame 120 of the battery cell assembly 100 according to an exemplary embodiment of the present invention.

Referring to FIGs. 1 to 3, the battery pack 500 includes a pack housing 501 and the battery cell assembly 100 mounted in the pack housing 501. The battery pack 500 includes one or more battery cell assemblies 100 mounted in the pack housing 501. In exemplary embodiments, the battery pack 500 may include two or more battery cell assemblies 100 arranged in a first direction (X direction).

The pack housing 501 may include a lower housing 510 having an accommodation space in which the battery cell assembly 100 is accommodated, and a pack cover 520 coupled to the lower housing 510 so as to cover the battery cell assembly 100 accommodated in the lower housing 510. The accommodation space of the lower housing 510 may be defined by a bottom wall 511 facing a lower surface of a cell block 110 of each battery cell assembly 100, and a side wall 513 located at a perimeter of the bottom wall 511.

The battery cell assembly 100 includes the cell block 110, the side frame 120. The battery cell assembly 100 may include a top cover plate 131 and a bottom cover plate 135.

The cell block 110 includes a plurality of battery cells 111. Each of the battery cells 111 is a basic unit of a lithium ion battery, i.e., a secondary battery. Each battery cell 111 may include an electrode assembly, an electrolyte, and a cell case. The electrode assembly embedded in the cell case may include a positive electrode, a negative electrode, and a separator between the positive electrode and the negative electrode. The electrode assembly may be any one of a jelly-roll type electrode assembly and a stack type electrode assembly according to an assembly type. The jelly-roll type electrode assembly may include a wound structure of a positive electrode, a negative electrode, and a separator interposed between the positive electrode and the negative electrode. The stack-type electrode assembly may include a plurality of positive electrodes, a plurality of negative electrodes, and a plurality of separators respectively interposed therebetween, all of which are sequentially stacked on one another. The positive electrode may include a positive electrode current collector and a positive electrode active material. The negative electrode may include a negative electrode current collector and a negative electrode active material.

The plurality of battery cells 111 may be connected in series and/or in parallel. As an example, the plurality of battery cells 111 may be connected in series to each other. As an another example, the plurality of battery cells 111 may be connected in parallel to each other. As an another example, when a set of two or more battery cells 111 connected in parallel to each other is defined as a bank, one bank composed of two or more battery cells 111 connected in parallel to each other and another bank composed of two or more battery cells 111 connected in parallel to each other may be connected in series.

Each battery cell 111 may correspond to a pouch-type battery cell, a cylindrical battery cell, or a prismatic battery cell. The electrode assembly may be included in various cell cases, e.g., a pouch, a cylindrical can, or a prismatic can. The electrode assembly of a pouch-type battery cell may be included in a pouch case including an aluminum laminate sheet. The electrode assembly of a cylindrical battery cell may be included in a cylindrical metal can. The electrode assembly of a prismatic battery cell may be included in a prismatic metal can. Each battery cell 111 may comprise a venting portion that faces the first space. For example, the venting portion of each battery cell 111 may be provided in the cell case of the battery cell 111. When the pressure in the cell case of each battery cell 111 exceeds a certain level, gas within the cell case of each battery cell 111 may be discharged into the first space through the venting portion of each battery cell 111. The first space may be provided between the bottom wall 511 of the lower housing 510 and the battery cell assembly 100.

In an exemplary embodiment, each battery cell 111 may correspond to a pouch-type battery cell, and the plurality of battery cells 111 may be stacked in the first direction (X direction) in one battery cell assembly 100 (for example, FIG. 1). In an exemplary embodiment, in each battery cell assembly, each of the plurality of battery cells 111 may correspond to a pouch-type battery cell having a length (thickness) in the first direction (X direction) smaller than a length in a second direction (Y direction), and the plurality of battery cells 111 may be stacked in the first direction (X direction). In an exemplary embodiment, each battery cell 111 may be a pouch-type battery cell, and a sealed portion of a pouch in the pouch-type battery cell may face the first space in order to easily exhaust the gas and/or flames from the battery cell. When the pressure in the pouch exceeds a certain level, the sealed portion of the pouch is partially broken, and the gas in the pouch may be discharged into the first space through the broken portion of the sealed portion.

When viewed in a plan view, the cell block 110 may have a rectangular shape in which a length in the first direction (X direction) is smaller than a length in the second direction (Y direction). In this case, the cell block 110 may have first and second side surfaces opposite to each other in the first direction (X direction), front and rear surfaces opposite to each other in the second direction (Y direction), and top and bottom surfaces opposite to each other in a third direction (Z direction).

A busbar frame on which busbars are mounted may be disposed on each of the front and rear surfaces of the cell block 110. A plurality of busbars may be mounted on the busbar frame at the front surface of the cell block 110, and may also be mounted on the busbar frame at the rear surface of the cell block 110. The battery cell assembly 100 may include an end plate 141 for covering the busbar frame connected to the front or rear surface of the cell block 110.

The busbar may be coupled to an electrode lead of the battery cell 111. For example, the busbar may be coupled to the electrode lead of the battery cell 111 by a welding method. For example, each busbar may be an inter-busbar for electrically connecting different battery cells 111 belonging to the cell block 110 by being connected to the electrode leads connected to different battery cells 111. For example, each busbar may be a terminal-busbar for electrically connecting the battery cell assembly 100 to other external electrical devices.

In an exemplary embodiment, the battery cell assembly 100 may include a single cell block 110. In another exemplary embodiment, the battery cell assembly 100 may include a cell block array composed of a plurality of cell blocks 110 arranged in the second direction (Y direction). For example, the battery cell assembly 100 may include two cell blocks 110 arranged in the second direction (Y direction). As an example, the battery cell assembly 100 may include a first cell block and a second cell block that are arranged in the second direction (Y direction) and electrically connected to each other.

The side frame 120 is provided at each of both side portions of the cell block 110. The battery cell assembly 100 is fastened to the pack housing 501 by a side mounting method in which the battery cell assembly 100 is fastened to a support structure 515 of the pack housing 501 through the side frame 120.

The side frame 120 includes a side wall portion 121 connected to a side surface of the cell block 110 and a flange portion 125 fastened to the support structure 515 of the pack housing 501 by a fastening member, such as a bolt BT, and supported by the support structure 515. Each of the side wall portion 121 and the flange portion 125 is a portion of the side frame 120, and the side wall portion 121 and the flange portion 125 may form one body. For example, the side frame 120 may be formed through an extrusion process, and the side wall portion 121 and the flange portion 125 may be made of the same material. The side wall portion 121 may be closer to the cell block 110 than the flange portion 125, and may extend in the second direction (Y direction) and the third direction (Z direction) along the side surface of the cell block 110. A plurality of flange portions 125 may be connected to the side wall portion 121, and the plurality of flange portions 125 may be arranged to be spaced apart from each other in the second direction (Y direction).

The side wall portion 121 includes a hollow space formed throughout an inside thereof. The hollow space includes an upper buffer space 241, a middle buffer space 245 and a lower buffer space 243. The side wall portion 121 includes an inner side wall 210 facing the side surface of the cell block 110, a first outer side wall 221 spaced apart from an upper portion of the inner side wall 210 with the upper buffer space 241 therebetween, a second outer side wall 223 spaced apart from a lower portion of the inner side wall 210 with the lower buffer space 243 therebetween, an upper wall 231 extending between an upper end portion (or upper edge) of the inner side wall 210 and an upper end portion (or upper edge) of the first outer side wall 221, and a lower wall 233 extending between a lower end portion (or lower edge) of the inner side wall 210 and a lower end portion (or lower edge) of the second outer side wall 223. The first outer side wall 221 and the second outer side wall 223 may be spaced apart from each other in the third direction (Z direction).

The inner side wall 210 may have a flat plate shape. For example, the inner side wall 210 may have a flat plate shape perpendicular to the first direction (X direction). The inner side wall 210 has the upper portion facing the first outer side wall 221 in the first direction (X direction), the lower portion facing the second outer side wall 223 in the first direction (X direction), and a middle portion extending in the third direction (Z direction) between the upper and lower portions of the inner side wall 210. A thickness of the inner side wall 210 (i.e., a thickness of the inner side wall 210 in the first direction (X direction)) may be substantially uniform. The thickness of the inner side wall 210 may have a range of several millimeters, for example, a range between 1 mm and 4 mm.

The first outer side wall 221 may have a flat plate shape. For example, the first outer side wall 221 may have a flat plate shape perpendicular to the first direction (X direction). The first outer side wall 221 is spaced apart from the upper portion of the inner side wall 210 in the first direction (X direction). A thickness of the first outer side wall 221 (i.e., a thickness of the first outer side wall 221 in the first direction (X direction)) may be substantially uniform. The thickness of the first outer side wall 221 may have a range of several millimeters, for example, a range between 1 mm and 4 mm. A distance between the first outer side wall 221 and the inner side wall 210 in the first direction (X direction) may be substantially uniform. For example, the distance between the first outer side wall 221 and the inner side wall 210 in the first direction (X direction) may have a range of several millimeters.

As the first outer side wall 221 is spaced apart from the inner side wall 210 in the first direction (X direction), the upper buffer space 241 is provided between the first outer side wall 221 and the inner side wall 210. The upper buffer space 241 may be defined by the upper portion of the inner side wall 210, the first outer side wall 221, and the upper wall 231. A width of the upper buffer space 241 in the first direction (X direction) (i.e., the distance between the inner side wall 210 and the first outer side wall 221 in the first direction (X direction)) may be uniform. The width of the upper buffer space 241 in the first direction (X direction) may be in a range of several millimeters, for example, a range between 2 mm and 6 mm or between 3 mm and 5 mm.

The second outer side wall 223 may have a flat plate shape. For example, the second outer side wall 223 may have a flat plate shape perpendicular to the first direction (X direction). The second outer side wall 223 may be spaced apart from the lower portion of the inner side wall 210 in the first direction (X direction). A thickness of the second outer side wall 223 (i.e., a thickness of the second outer side wall 223 in the first direction (X direction)) may be substantially uniform. The thickness of the second outer side wall 223 may have a range of several millimeters, for example, a range between 1 mm and 4 mm. The thickness of the first outer side wall 221 and the thickness of the second outer side wall 223 may be substantially the same. A distance between the second outer side wall 223 and the inner side wall 210 in the first direction (X direction) may be substantially uniform. For example, the distance between the second outer side wall 223 and the inner side wall 210 in the first direction (X direction) may have a range of several millimeters. The distance between the second outer side wall 223 and the inner side wall 210 in the first direction (X direction) may be the same as or similar to the distance between the first outer side wall 221 and the inner side wall 210 in the first direction (X direction).

As the second outer side wall 223 is spaced apart from the inner side wall 210 in the first direction (X direction), the lower buffer space 243 is provided between the second outer side wall 223 and the inner side wall 210. The lower buffer space 243 may be defined by the lower portion of the inner side wall 210, the second outer side wall 223, and the lower wall 233. A width of the lower buffer space 243 in the first direction (X direction) (i.e., the distance between the inner side wall 210 and second outer side wall 223 in the first direction (X direction)) may be uniform. The width of the lower buffer space 243 in the first direction (X direction) may be in a range of several millimeters, for example, a range between 2 mm and 6 mm or between 3 mm and 5 mm. The width of the lower buffer space 243 in the first direction (X direction) may be the same as the width of the upper buffer space 241 in the first direction (X direction).

The upper buffer space 241 and the lower buffer space 243 communicate with each other. More specifically, the upper buffer space 241 communicates with the lower buffer space 243 through the middle buffer space 245 adjacent to the middle portion of the inner side wall 210. The middle buffer space 245 may be provided between a lower end of the first outer side wall 221 and an upper end of the second outer side wall 223 in the third direction (Z direction). The upper buffer space 241, the middle buffer space 245, and the lower buffer space 243 may communicate with each other to form an integrated single buffer space, i.e., the hollow space.

The flange portion 125 has an inner space 259 communicating with the middle buffer space 245. The flange portion 125 may include an upper fastening plate 251, a lower fastening plate 253, and a connecting plate 255.

The upper fastening plate 251 may be connected to the lower end of the first outer side wall 221 and may extend in the first direction (X direction) from the lower end of the first outer side wall 221. The upper fastening plate 251 may include a fastening hole through which the bolt BT passes. The upper fastening plate 251 may have a flat plate shape perpendicular to the third direction (Z direction). A thickness of the upper fastening plate 251 (i.e., a thickness of the upper fastening plate 251 in the third direction (Z direction)) may have a range of several millimeters, for example, a range between 2 mm and 5 mm.

The lower fastening plate 253 may be connected to the upper end of the second outer side wall 223 and may extend in the first direction (X direction) from the upper end of the second outer side wall 223. The upper fastening plate 251 and the lower fastening plate 253 may be spaced apart from each other in the third direction (Z direction) with the inner space 259 therebetween. The lower fastening plate 253 may include a fastening hole through which the bolt BT passes. The fastening hole of the lower fastening plate 253 and the fastening hole of the upper fastening plate 251 may be aligned with each other in the third direction (Z direction). A thickness of the lower fastening plate 253 (i.e., a thickness of the lower fastening plate 253 in the third direction (Z direction)) may have a range of several millimeters, for example, a range between 2 mm and 5 mm.

The connecting plate 255 may extend in the third direction (Z direction) between the upper fastening plate 251 and the lower fastening plate 253. The connecting plate 255 may extend in the third direction (Z direction) from an outer edge of the upper fastening plate 251 to an outer edge of the lower fastening plate 253. The inner space 259 of the flange portion 125 may be defined by the upper fastening plate 251, the lower fastening plate 253, and the connecting plate 255. The bolt BT passes through the upper fastening plate 251 and the lower fastening plate 253, and may pass through the inner space 259 of the flange portion 125.

The flange portion 125 may further include a reinforcing rib 257 for reinforcing the rigidity of the side frame 120. The reinforcing rib 257 extends across the inner space 259 of the flange portion 125 in the third direction (Z direction), and may extend from a lower surface of the upper fastening plate 251 to an upper surface of the lower fastening plate 253 in the third direction (Z direction). The reinforcing rib 257 may be located between the inner side wall 210 of the side wall portion 121 and the connecting plate 255, or closer to the inner side wall 210 of the side wall portion 121 than the connecting plate 255.

The top cover plate 131 may cover the upper surface of the cell block 110. The top cover plate 131 may be coupled to an upper end portion of each of the side frames disposed on both sides of the cell block 110. For example, one side portion of the top cover plate 131 may be coupled to the upper end portion of the side frame through welding. For example, one side portion of the top cover plate 131 may be coupled to the upper wall 231 of the side frame 120.

The top cover plate 131 may be attached to the upper surface of the cell block 110, and may be thermally coupled to the cell block 110. The top cover plate 131 may be attached to the upper surface of the cell block 110 through a thermally conductive adhesive layer interposed between the top cover plate 131 and the upper surface of the cell block 110. For example, the thermally conductive adhesive layer may include a thermal interface material (TIM).

The top cover plate 131 may include a cooling channel 1311 configured to allow a cooling fluid to flow therethrough, and may be configured to cool the cell block 110. The top cover plate 131 may be referred to as a cooling plate. The top cover plate 131 may be configured to cool the cell block 110 by being thermally coupled to the cell block 110 through the thermally conductive adhesive layer. A cooling fluid provided from the outside of the battery cell assembly 100 may flow into the cooling channel 1311 through an inlet of the cooling channel 1311, flow along the cooling channel 1311, and then flow out to the outside through an outlet of the cooling channel 1311. Cooling of the battery cell assembly 100 may be performed while the cooling fluid flows along the cooling channel 1311. For example, the top cover plate 131 may be manufactured by bonding two plates, and the cooling channel 1311 may include a space defined between the two plates.

The bottom cover plate 135 may extend along the lower surface of the cell block 110 and cover the lower surface of the cell block 110. The bottom cover plate 135 may be coupled to a lower end portion of each of the side frames disposed on both sides of the cell block 110. For example, one side portion of the bottom cover plate 135 may be coupled to the lower end portion of the side frame through welding. For example, one side portion of the bottom cover plate 135 may be coupled to the lower wall 233 of the side frame 120. The bottom cover plate 135, the top cover plate 131, and the side frame 120 may together form a case surrounding the cell block 110. The bottom cover plate 135 may include a venting passage for venting high-temperature gas generated in the cell block 110 to a space below the cell block 110.

When the battery pack 500 is mounted in a vehicle, a passenger compartment in which passengers board may be located above the pack cover 520, and the ground on which the vehicle travels may be located below the lower housing 510.

The battery cell assembly 100 may be supported by the support structure 515 provided on the bottom wall 511 of the lower housing 510 by a side mounting method, and a free volume FV (first space) may be provided between the bottom wall 511 of the lower housing 510 and the battery cell assembly 100. Gas and flames generated in a thermal runaway situation may be moved through the free volume FV. That is, the free volume FV (first space) becomes a venting passage through which high-temperature gas and flames can move.

In addition, even when a strong impact is generated due to foreign material that bounces onto a lower portion of the vehicle in a hard ground driving situation such as an unpaved road, the free volume FV (first space) may absorb the impact. Thus, the plurality of battery cell assemblies 100 may be prevented from being damaged by the impact. The free volume FV (first space) has an empty space between each of the plurality of battery cell assemblies 100 and the lower housing 510, and when the lower housing 510 is deformed toward the battery cell assembly 100 due to the impact applied to the lower portion of the vehicle, the free volume FV (first space) may be utilized as a space for allowing some freedom of deformation of the lower housing 510.

A height of the free volume FV (first space), and a distance between the bottom wall of the lower housing 510 and the battery cell assembly 100 may be set to sufficiently absorb an external impact. The height of the free volume FV may be determined in consideration of the dimensions and rigidity of a vehicle frame, the dimensions and rigidity of the lower housing 510, the dimensions of the battery pack 500, the amount and discharge speed of gas generated during thermal runaway, and the like. For example, when the thickness or rigidity of the vehicle frame or the bottom wall of the lower housing 510 is relatively large, at least one of the size and height of the free volume FV (first space) may be relatively reduced. In addition, when the thickness or rigidity of the vehicle frame or the bottom wall of the lower housing 510 is relatively small, the possibility of deformation of the bottom wall of the lower housing 510 is large, and thus at least one of the size and the height of the free volume FV (first space) may be relatively increased in order to protect the battery cell assembly 100. In addition, when the size of the battery pack 500 is relatively large according to the specifications of the battery pack 500, a relatively large free volume FV (first space) may be secured. When the size of the battery pack 500 is relatively small, the height of the free volume FV (first space) that may be secured may be relatively small, and it may be necessary to relatively increase the thickness and rigidity of the bottom wall of the lower housing 510. In addition, when the height of the free volume FV (first space) is too small, a gas discharge passage is reduced so that an internal pressure of the battery pack 500 may sharply increase during thermal runaway. Accordingly, the size and height of the free volume FV (first space) may be determined in consideration of the amount and discharge speed of generated gas.

The maximum height of the free volume FV (first space) may be determined according to the degree of damage to the battery cell 111 included in the battery cell assembly 100. For example, when an allowable damage limit of the battery cell 111 is 1 mm, the free volume FV may be determined such that the battery cell 111 is not deformed more than 1 mm when the lower housing 510 is deformed and presses a lower surface of the battery cell 111. In this case, the amount of deformation of the lower housing 510 may vary according to the thickness or rigidity of the lower housing 510. Thus, the size or height of the free volume FV (first space) may be determined in consideration of both the allowable damage limit of the battery cell 111 and the thickness and rigidity of the lower housing 510.

In an exemplary embodiment, an upper surface of the battery cell assembly 100 may be in close contact with a lower surface of the pack cover 520. When there is a space between the battery cell assembly 100 and the pack cover 520, during thermal runaway, high-temperature gas may be introduced into the space between the battery cell assembly 100 and the pack cover 520, and thus heat and flames may propagate to another adjacent battery cell assembly 100. In addition, there is a concern that the heat and flames may also be transmitted to the pack cover 520 to affect the passenger compartment above the pack cover 520. Thus, by bringing the upper surface of the battery cell assembly 100 into close contact with the lower surface of the pack cover 520, the gas or flames generated inside the battery pack 500 may be guided to the free volume FV (first space).

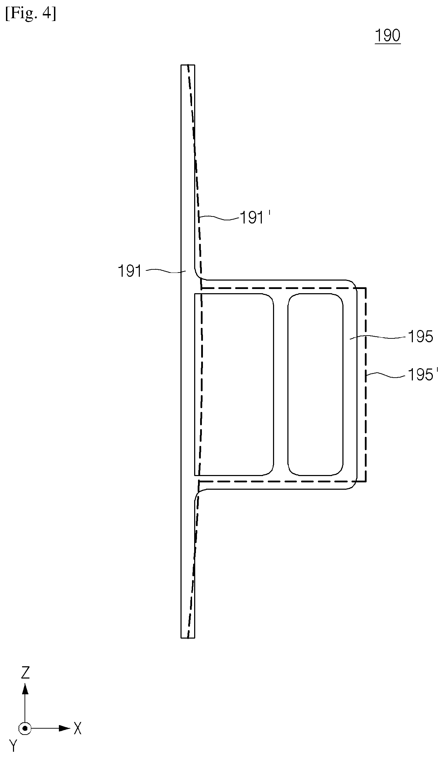

FIG. 4 is a cross-sectional view illustrating a side frame 190 according to a comparative example not covered by the present invention.

Referring to FIG. 4, the side frame 190 according to the comparative example may include a side wall 191 connected to one side of the cell block and a flange portion 195 connected to the side wall 191. The side frame 190 may be fastened to the support structure 515 (FIG. 1) of the pack housing 501 (FIG. 1) through a bolt. When a thickness of the cell block is changed due to swelling of the battery cell, a strong pressure is applied to a fastening portion between the side frame 190 and the support structure 515. In FIG. 4, reference numeral 191' denotes the side wall 191 deformed by an external force generated due to swelling of the battery cell, and reference numeral 195' denotes the flange portion 195 deformed by the external force generated due to swelling of the battery cell. The external force generated due to swelling of the battery cell 111 may cause damages to the bolt, the side frame 190, and/or the support structure 515.

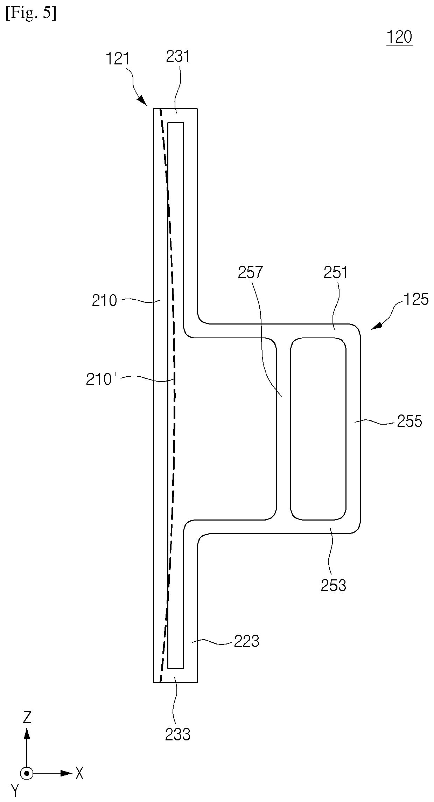

FIG. 5 is a cross-sectional view illustrating the side frame 120 according to an exemplary embodiment of the present invention.

In FIG. 5, reference numeral 210' denotes the inner side wall 210 deformed by an external force generated due to swelling of the battery cell 111. Referring to FIG. 5 together with FIG. 1, when a thickness of the cell block 110 is changed due to swelling of the battery cell 111, a force acting between the cell block 110 and a fastening portion between the side frame 120 and the support structure 515 in the first direction (X direction) increases. According to the embodiments, the force may be attenuated and distributed by the buffer space provided in the side wall portion 121. As the force is attenuated and distributed by the buffer space provided in the side wall portion 121, the pressure applied to the fastening portion between the side frame 120 and the support structure 515 may be reduced, and damage to a fastening member such as the bolt BT, the side frame 120, and/or the support structure 515 may be reduced. In addition, as the force is attenuated and distributed by the buffer space provided in the side wall portion 121, a surface pressure applied to the cell block 110 or the battery cell 111 may be made more uniform. Accordingly, the structural safety of the battery cell assembly 100 may be improved, and the safety and reliability of the battery cell assembly 100 and the battery pack 500 including the same may be improved.

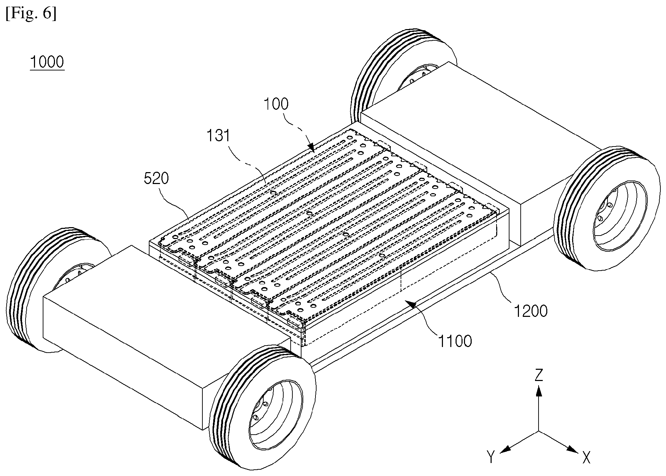

FIG. 6 is a schematic view illustrating an electric mobility device, e.g., electric vehicle 1000 equipped with the battery pack 1100.

In FIG. 6, for simple illustration, only a vehicle body frame 1200 forming a lower frame of the vehicle, the battery pack 1100 coupled to the vehicle body frame 1200, and tires are shown. The battery pack 1100 may include the battery pack 500 described with reference to FIGS. 1 to 3.

In the case of a typical battery pack, battery cell assemblies are installed on a bottom portion of a pack housing of the battery pack. In the embodiments, the free volume FV (first space, FIG. 1) may be provided below the battery cell assemblies 100 of the battery pack 1100. That is, since there is no space between the battery cell assembly 100 and the pack cover 520, it is possible to prevent gas/flames generated in the battery cell assembly 100 from being transmitted to a passenger compartment at an upper portion of the vehicle. The gas/flames are guided to the free volume FV (first space) provided between the battery cell assembly 100 and the pack housing of the battery pack 1100. The gas/flames flow through the free volume FV (first space) and is discharged to a lower side of the vehicle through a gas vent portion installed in the battery pack 1100, e.g., an exhaust device. The gas vent portion may be located at a side of the pack facing a rear side of the electric mobility device. The gas vent portion may include a relief valve and/or a rupture valve. In addition, according to the present embodiments, since the free volume FV (first space) is provided between the battery cell assembly 100 and the pack housing in the battery pack 1100, damage to the battery cell assembly 100 may be prevented even when the pack housing is deformed.

The battery pack 1100 and the electric vehicle 1000 having the same may enhance the safety of passengers. In addition, the battery cell assembly 100, which is a key component, may be protected, and the durability of the battery pack 1100 and the electric vehicle 1000 may be improved.

As above, the present invention has been described in more detail through the drawings and embodiments. However, since the configuration described in the drawings or embodiments described herein is merely one embodiment of the present invention.

### [Description of Reference Numerals]

100: battery cell assembly, 110: cell block
111: battery cell, 120: side frame
121: side wall portion, 125: flange portion
131: top cover plate, 135: bottom cover plate
500: battery pack, 510: lower housing
515: support structure, 520: pack cover

## Claims

1. A battery cell assembly (100), comprising:
a cell block (110) including a plurality of battery cells (111); and
a side frame (120) disposed on one side surface of the cell block (110),
wherein the side frame (120) comprises a side wall portion (121) and a flange portion (125) disposed on the side wall portion (121) on a side opposite the cell block (110) and configured to be fastened to an external support structure (515), and
wherein the side wall portion (121) comprises a hollow space formed throughout an inside thereof,
wherein the hollow space comprises an upper buffer space (241) and a lower buffer space (243),
wherein the side wall portion (121) comprises an inner side wall (210) facing the one side surface of the cell block (110), a first outer side wall (221) spaced apart from an upper portion of the inner side wall (210) with the upper buffer space (241) therebetween, and a second outer side wall (223) spaced apart from a lower portion of the inner side wall (210) with the lower buffer space (243) therebetween,
wherein the flange portion (125) is connected to the first outer side wall (221) and the second outer side wall (223),
wherein each of the first outer side wall (221) and the second outer side wall (223) is spaced apart from the inner side wall (210) in a first direction, and
wherein the first outer side wall (221) is spaced apart from the second outer side wall (223),
wherein the upper buffer space (241) communicates with the lower buffer space (243) through a middle buffer space (245) located near a middle portion of the inner side wall (210),
wherein the flange portion (125) includes an inner space (259) through which a fastening member passes, and
wherein the inner space (259) of the flange portion (125) communicates with the middle buffer space (245).

2. The battery cell assembly (100) of claim 1, wherein the plurality of battery cells (111) are stacked in the first direction.

3. The battery cell assembly (100) of claim 1, wherein the side wall portion (121) further comprises:
an upper wall extending (231) between an upper end portion of the inner side wall (210) and an upper end portion of the first outer side wall (221); and
a lower wall extending (233) between a lower end portion of the inner side wall (210) and a lower end portion of the second outer side wall (223),
wherein the upper buffer space (241) is defined by the upper portion of the inner side wall (210), the upper wall (231), and the first outer side wall (221), and
wherein the lower buffer space (243) is defined by the lower portion of the inner side wall (210), the lower wall (233), and the second outer side wall (223).

4. The battery cell assembly (100) of claim 1, wherein the flange portion (125) comprises:
an upper fastening plate (251) through which the fastening member passes;
a lower fastening plate (253) through which the fastening member passes and which is spaced apart from the upper fastening plate (251) with the inner space (259) therebetween; and
a connecting plate (255) connecting the upper fastening plate (251) to the lower fastening plate (253).

5. The battery cell assembly (100) of claim 4, wherein the flange portion (125) further comprises:
a reinforcing rib (257) which extends from the upper fastening plate (251) to the lower fastening plate (253) and is closer to the inner side wall (210) of the side wall portion (121) than the connecting plate (255).

6. The battery cell assembly (100) of claim 1, further comprising:
a bottom cover plate (135) under the cell block (110) and coupled to a lower end portion of the side wall portion (121).

7. The battery cell assembly (100) of claim 1, further comprising:
a top cover plate (131) on the cell block (110) and coupled to an upper end portion of the side wall portion (121).

8. The battery cell assembly (100) of claim 7, wherein the top cover plate (131) comprises a cooling channel (1311).

9. A battery pack (500), comprising:
a pack housing (501) including a support structure (515); and
the battery cell assembly (100) of claim 1 accommodated in the pack housing (501).

10. The battery pack (500) of claim 9, wherein the flange portion (125) comprises:
an upper fastening plate (251) through which a fastening member passes;
a lower fastening plate (253) through which the fastening member passes and which is spaced apart from the upper fastening plate (251) with an inner space (259) therebetween; and
a connecting plate (255) connecting the upper fastening plate (251) to the lower fastening plate (253), and
wherein the inner space (259) communicates with the middle buffer space (245).

11. The battery pack (500) of claim 10, wherein the battery cell assembly (100) further comprises:
a bottom cover plate (135) under the cell block (110); and
a top cover plate (131) on top of the cell block (110) and including a cooling channel (1311).

12. The battery pack (500) of claim 11, wherein the battery cell assembly (100) and a bottom wall of the pack housing (501) are spaced apart from each other to form a first space.

13. The battery pack (500) of claim 12, wherein the side wall portion (121) further comprises:
an upper wall extending (231) between an upper end portion of the inner side wall (210) and an upper end portion of the first outer side wall (221) and coupled to the top cover plate (131); and
a lower wall extending (233) between a lower end portion of the inner side wall (210) and a lower end portion of the second outer side wall (223) and coupled to the bottom cover plate (135).

## Patentansprüche

1. Batteriezellenanordnung (100), umfassend:
einen Zellblock (110), der eine Mehrzahl von Batteriezellen (111) umfasst; und
einen Seitenrahmen (120), der an einer Seitenfläche des Zellblocks (110) angeordnet ist,
wobei der Seitenrahmen (120) einen Seitenwandabschnitt (121) und einen Flanschabschnitt (125) umfasst, der an dem Seitenwandabschnitt (121) auf einer dem Zellblock (110) abgewandten Seite angeordnet und dazu eingerichtet ist, an einer externen Stützstruktur (515) befestigt zu werden, und
wobei der Seitenwandabschnitt (121) einen in seinem Inneren durchgehend ausgebildeten Hohlraum umfasst,
wobei der Hohlraum einen oberen Pufferraum (241) und einen unteren Pufferraum (243) umfasst,
wobei der Seitenwandabschnitt (121) eine innere Seitenwand (210), die der einen Seitenfläche des Zellblocks (110) zugewandt ist, eine erste äußere Seitenwand (221), die von einem oberen Abschnitt der inneren Seitenwand (210) beabstandet ist, wobei sich der obere Pufferraum (241) dazwischen befindet, und eine zweite äußere Seitenwand (223), die von einem unteren Abschnitt der inneren Seitenwand (210) beabstandet ist, wobei sich der untere Pufferraum (243) dazwischen befindet, umfasst,
wobei der Flanschabschnitt (125) mit der ersten äußeren Seitenwand (221) und der zweiten äußeren Seitenwand (223) verbunden ist,
wobei die erste äußere Seitenwand (221) und die zweite äußere Seitenwand (223) jeweils in einer ersten Richtung von der inneren Seitenwand (210) beabstandet sind, und
wobei die erste äußere Seitenwand (221) von der zweiten äußeren Seitenwand (223) beabstandet ist,
wobei der obere Pufferraum (241) über einen mittleren Pufferraum (245), der nahe einem mittleren Abschnitt der inneren Seitenwand (210) angeordnet ist, mit dem unteren Pufferraum (243) in Verbindung steht,
wobei der Flanschabschnitt (125) einen Innenraum (259) umfasst, durch den ein Befestigungselement verläuft, und
wobei der Innenraum (259) des Flanschabschnitts (125) mit dem mittleren Pufferraum (245) in Verbindung steht.

2. Batteriezellenanordnung (100) nach Anspruch 1, wobei die Mehrzahl von Batteriezellen (111) in der ersten Richtung gestapelt angeordnet ist.

3. Batteriezellenanordnung (100) nach Anspruch 1, wobei der Seitenwandabschnitt (121) ferner umfasst:
eine obere Wand (231), die sich zwischen einem oberen Endabschnitt der inneren Seitenwand (210) und einem oberen Endabschnitt der ersten äußeren Seitenwand (221) erstreckt; und
eine untere Wand (233), die sich zwischen einem unteren Endabschnitt der inneren Seitenwand (210) und einem unteren Endabschnitt der zweiten äußeren Seitenwand (223) erstreckt,
wobei der obere Pufferraum (241) durch den oberen Abschnitt der inneren Seitenwand (210), die obere Wand (231) und die erste äußere Seitenwand (221) definiert ist, und
wobei der untere Pufferraum (243) durch den unteren Abschnitt der inneren Seitenwand (210), die untere Wand (233) und die zweite äußere Seitenwand (223) definiert ist.

4. Batteriezellenanordnung (100) nach Anspruch 1, wobei der Flanschabschnitt (125) umfasst:
eine obere Befestigungsplatte (251), durch die das Befestigungselement verläuft;
eine untere Befestigungsplatte (253), durch die das Befestigungselement verläuft und die von der oberen Befestigungsplatte (251) beabstandet ist, wobei sich der Innenraum (259) dazwischen befindet; und
eine Verbindungsplatte (255), welche die obere Befestigungsplatte (251) mit der unteren Befestigungsplatte (253) verbindet.

5. Batteriezellenanordnung (100) nach Anspruch 4, wobei der Flanschabschnitt (125) ferner umfasst:
eine Verstärkungsrippe (257), die sich von der oberen Befestigungsplatte (251) bis zur unteren Befestigungsplatte (253) erstreckt und näher an der inneren Seitenwand (210) des Seitenwandabschnitts (121) liegt als die Verbindungsplatte (255).

6. Batteriezellenanordnung (100) nach Anspruch 1, ferner umfassend:
eine untere Abdeckplatte (135) unter dem Zellblock (110), die mit einem unteren Endabschnitt des Seitenwandabschnitts (121) gekoppelt ist.

7. Batteriezellenanordnung (100) nach Anspruch 1, ferner umfassend:
eine obere Abdeckplatte (131) auf dem Zellblock (110), die mit einem oberen Endabschnitt des Seitenwandabschnitts (121) gekoppelt ist.

8. Batteriezellenanordnung (100) nach Anspruch 7, wobei die obere Abdeckplatte (131) einen Kühlkanal (1311) umfasst.

9. Batteriepack (500), umfassend:
ein Packgehäuse (501), das eine Stützstruktur (515) umfasst; und
die Batteriezellenanordnung (100) nach Anspruch 1, die in dem Packgehäuse (501) aufgenommen ist.

10. Batteriepack (500) nach Anspruch 9, wobei der Flanschabschnitt (125) umfasst:
eine obere Befestigungsplatte (251), durch die ein Befestigungselement verläuft;
eine untere Befestigungsplatte (253), durch die das Befestigungselement verläuft und die von der oberen Befestigungsplatte (251) beabstandet ist, wobei sich ein Innenraum (259) dazwischen befindet; und
eine Verbindungsplatte (255), welche die obere Befestigungsplatte (251) mit der unteren Befestigungsplatte (253) verbindet, und
wobei der Innenraum (259) mit dem mittleren Pufferraum (245) in Verbindung steht.

11. Batteriepack (500) nach Anspruch 10, wobei die Batteriezellenanordnung (100) ferner umfasst:
eine untere Abdeckplatte (135) unter dem Zellblock (110); und
eine obere Abdeckplatte (131) auf der Oberseite des Zellblocks (110), die einen Kühlkanal (1311) umfasst.

12. Batteriepack (500) nach Anspruch 11, wobei die Batteriezellenanordnung (100) und eine Bodenwand des Packgehäuses (501) voneinander beabstandet sind, um einen ersten Raum zu bilden.

13. Batteriepack (500) nach Anspruch 12, wobei der Seitenwandabschnitt (121) ferner umfasst:
eine obere Wand (231), die sich zwischen einem oberen Endabschnitt der inneren Seitenwand (210) und einem oberen Endabschnitt der ersten äußeren Seitenwand (221) erstreckt und mit der oberen Abdeckplatte (131) gekoppelt ist; und
eine untere Wand (233), die sich zwischen einem unteren Endabschnitt der inneren Seitenwand (210) und einem unteren Endabschnitt der zweiten äußeren Seitenwand (223) erstreckt und mit der unteren Abdeckplatte (135) gekoppelt ist.

## Revendications

1. Ensemble de cellules de batterie (100), comprenant :
un bloc de cellules (110) comprenant une pluralité de cellules de batterie (111) ; et
un cadre latéral (120) disposé sur une surface latérale du bloc de cellules (110),
où le cadre latéral (120) comprend une partie de paroi latérale (121) et une partie de bride (125) disposée sur la partie de paroi latérale (121) sur un côté opposé au bloc de cellules (110), et prévue pour être fixée à une structure de support extérieure (515), et
où la partie de paroi latérale (121) comprend un espace creux formé à l'intérieur de celle-ci, où l'espace creux comprend un espace de tampon supérieur (241) et un espace de tampon inférieur (243),
où la partie de paroi latérale (121) comprend une paroi latérale intérieure (210) faisant face à la surface latérale du bloc de cellules (110), une première paroi latérale extérieure (221) espacée d'une partie supérieure de la paroi latérale intérieure (210), l'espace de tampon supérieur (241) étant intercalé entre celles-ci, et une deuxième paroi latérale extérieure (223) espacée d'une partie inférieure de la paroi latérale intérieure (210), l'espace de tampon inférieur (243) étant intercalé entre celles-ci,
où la partie de bride (125) est raccordée à la première paroi latérale extérieure (221) et à la deuxième paroi latérale extérieure (223),
où la première paroi latérale extérieure (221) et la deuxième paroi latérale extérieure (223) sont espacées chacune de la paroi latérale intérieure (210) dans une première direction, et où la première paroi latérale extérieure (221) est espacée de la deuxième paroi latérale extérieure (223),
où l'espace de tampon supérieur (241) communique avec l'espace de tampon inférieur (243) par un espace de tampon central (245) situé à proximité d'une partie centrale de la paroi latérale intérieure (210),
où la partie de bride (125) présente un espace intérieur (259) par lequel passe un élément de fixation, et
où l'espace intérieur (259) de la partie de bride (125) communique avec l'espace de tampon central (245).

2. Ensemble de cellules de batterie (100) selon la revendication 1, où la pluralité de cellules de batterie (111) sont empilées dans la première direction.

3. Ensemble de cellules de batterie (100) selon la revendication 1, où la partie de paroi latérale (121) comprend en outre :
une paroi supérieure (231) s'étendant entre une partie d'extrémité supérieure de la paroi latérale intérieure (210) et une partie d'extrémité supérieure de la première paroi latérale extérieure (221) ; et
une paroi inférieure (233) s'étendant entre une partie d'extrémité inférieure de la paroi latérale intérieure (210) et une partie d'extrémité inférieure de la deuxième paroi latérale extérieure (223),
où l'espace de tampon supérieur (241) est défini par la partie supérieure de la paroi latérale intérieure (210), la paroi supérieure (231) et la première paroi latérale extérieure (221), et
où l'espace de tampon inférieur (243) est défini par la partie inférieure de la paroi latérale intérieure (210), la paroi inférieure (233) et la deuxième paroi latérale extérieure (223).

4. Ensemble de cellules de batterie (100) selon la revendication 1, où la partie de bride (125) comprend :
une plaque de fixation supérieure (251) à travers laquelle passe l'élément de fixation ;
une plaque de fixation inférieure (253) à travers laquelle passe l'élément de fixation et qui est espacée de la plaque de fixation supérieure (251), l'espace intérieur (259) étant intercalé entre celles-ci ; et
une plaque de connexion (255) reliant la plaque de fixation supérieure (251) à la plaque de fixation inférieure (253).

5. Ensemble de cellules de batterie (100) selon la revendication 4, où la partie de bride (125) comprend en outre :
une nervure de renforcement (257) s'étendant de la plaque de fixation supérieure (251) à la plaque de fixation inférieure (253) et plus proche de la paroi latérale intérieure (210) de la partie de paroi latérale (121) que la plaque de connexion (255).

6. Ensemble de cellules de batterie (100) selon la revendication 1, comprenant en outre :
une plaque de couverture inférieure (135) sous le bloc de cellules (110), raccordée à une partie d'extrémité inférieure de la partie de paroi latérale (121).

7. Ensemble de cellules de batterie (100) selon la revendication 1, comprenant en outre :
une plaque de couverture supérieure (131) sur le bloc de cellules (110), raccordée à une partie d'extrémité supérieure de la partie de paroi latérale (121).

8. Ensemble de cellules de batterie (100) selon la revendication 7, où la plaque de couverture supérieure (131) comprend un canal de refroidissement (1311).

9. Bloc-batterie (500), comprenant :
un boîtier de bloc (501) présentant une structure de support (515) ; et
l'ensemble de cellules de batterie (100) selon la revendication 1, logé dans le boîtier de bloc (501).

10. Bloc-batterie (500) selon la revendication 9, où la partie de bride (125) comprend :
une plaque de fixation supérieure (251) à travers laquelle passe un élément de fixation ;
une plaque de fixation inférieure (253) à travers laquelle passe l'élément de fixation et qui est espacée de la plaque de fixation supérieure (251), un espace intérieur (259) étant intercalé entre celles-ci ; et
une plaque de connexion (255) reliant la plaque de fixation supérieure (251) à la plaque de fixation inférieure (253), et
où l'espace intérieur (259) communique avec l'espace de tampon central (245).

11. Bloc-batterie (500) selon la revendication 10, où l'ensemble de cellules de batterie (100) comprend en outre :
une plaque de couverture inférieure (135) sous le bloc de cellules (110) ; et
une plaque de couverture supérieure (131) sur le dessus du bloc de cellules (110) et
comprenant un canal de refroidissement (1311).

12. Bloc-batterie (500) selon la revendication 11, où l'ensemble de cellules de batterie (100) et une paroi inférieure du boîtier de bloc (501) sont espacés entre eux de manière à former un premier espace.

13. Bloc-batterie (500) selon la revendication 12, où la partie de paroi latérale (121) comprend en outre :
une paroi supérieure (231) s'étendant entre une partie d'extrémité supérieure de la paroi latérale intérieure (210) et une partie d'extrémité supérieure de la première paroi latérale extérieure (221) et raccordée à la plaque de recouvrement supérieure (131) ; et
une paroi inférieure (233) s'étendant entre une partie d'extrémité inférieure de la paroi latérale intérieure (210) et une partie d'extrémité inférieure de la deuxième paroi latérale extérieure (223) et raccordée à la plaque de couvercle inférieure (135).
